# FASCICULE DE BREVET EUROPEEN

(11) **EP 0 539 253 B1**
(45) Date de publication et mention de la délivrance du brevet: **29.11.1995**
(21) Numéro de dépôt: 92402677.6
(22) Date de dépôt: 30.09.1992
(51) Int. Cl.: F16D 55/224

(54) **Frein à disque**
Scheibenbremse
Disc brake

(30) Priorité: 25.10.1991 IT TO910804
(43) Date de publication de la demande: 28.04.1993
(73) Titulaire: AlliedSignal Freni S.p.A., 70026 Modugno (IT)
(72) Inventeur: Imponente, Michele M., I-70123 Bari (IT); Lacalamita, Giovanni, I-70123 Bari (IT)
(74) Mandataire: Bentz, Jean-Paul

(56) Documents cités:
- EP-A- 0 036 368
- EP-A- 0 054 496
- EP-A- 0 100 273
- DE-A- 2 845 275
- DE-A- 2 950 232
- US-A- 4 511 019

## Description

L'invention a pour objet un frein à disque à étrier coulissant notamment pour véhicule automobile.

L'invention concerne en particulier un frein à disque dont l'étrier est monté coulissant au moyen d'une colonnette axiale, sur un support fixe dans lequel sont reçus en ancrage et en coulissement deux éléments de friction susceptibles de venir en engagement de friction avec les faces opposées d'un disque tournant lors de la mise en oeuvre d'un moteur de frein agissant directement sur l'un des éléments de friction et agissant sur l'autre élément de friction par réaction au travers de l'étrier coulissant.

De façon connue, dans ce type de frein à disque, l'étrier est généralement maintenu en position sur le support fixe, lors de l'assemblage du frein, soit par l'intermédiaire d'une goupille passant dans des perçages ménagés dans des pattes solidaires du support fixe et dans une ouverture ménagée dans un prolongement de l'étrier et maintenue en place par un moyen de retenue tel qu'une clavette, soit par l'intermédiaire d'une seconde colonnette axiale associée au support fixe par une liaison filetée, et, comme par exemple dans EP-A-0 054 496 muni d'un manchon de verrouillage maintenu solidaire de l'étrier au moyen d'un élément de verrouillage dont une portion passe par un orifice formé dans l'étrier en verrouillant le manchon et dont une autre portion en forme de U immobilise l'élément de verrouillage par rapport à l'étrier.

On a également proposé dans EP-A-0 036 368 de verrouiller l'étrier sur le support fixe au moyen d'un élément élastique allonge fixé au support fixe ou à l'étrier par une de ses extrémites, et maintenu élastiquement en vis-à-vis d'une position entaillée formée dans l'étrier ou dans le support fixe et qui comporte une face d'appui s'étendant axialement pour éviter l'échappement radial de l'élément de verrouillage.

Ces différents moyens de verrouillage de l'étrier en rotation autour de la colonnette sur le support fixe présentent tous l'inconvénient majeur d'être d'un montage complexe. En effet, un frein à disque est toujours logé au voisinage de l'essieu et de la fusée d'une roue de véhicule, espace par essence réduit et d'accès difficile, où les manoeuvres nécessaires au montage de pièces de petites dimensions à des emplacements précis sont délicates et fastidieuses. De plus, la difficulté d'accès à ces endroits rend évidemment très difficile, et parfois impossible, le contrôle visuel de la bonne mise en place du moyen de verrouillage en rotation de l'étrier sur le support fixe, ce qui peut être nuisible à la sécurité du montage du frein à disque, qui est lui-même l'organe de sécurité principal d'un véhicule automobile.

L'invention a pour objet un frein à disque du type décrit plus haut dans lequel un tel inconvénient est évité.

Dans ce but, l'invention propose un frein à disque à étrier monté coulissant sur un support fixe comportant deux éléments de friction reçus en ancrage et en coulissement dans ledit support fixe et susceptibles de venir en engagement de friction avec les faces opposées d'un disque tournant lors de l'actionnement d'un moteur de frein, une colonnette axiale solidaire du support fixe reçue en coulissement dans un alésage correspondant formé dans l'étrier et un moyen de verrouillage de l'étrier en rotation autour de la colonnette sur le support fixe.

Selon un premier mode de réalisation de l'invention, le moyen de verrouillage de l'étrier sur le support fixe comporte une partie élastiquement déformable en direction radiale, constituée par un renflement formé sur la paroi intérieure d'une douille disposée dans un perçage ménagé dans une patte solidaire du support fixe, et le renflement de la douille coopérant avec une gorge périphérique formée sur le moyen de verrouillage pour bloquer ce dernier.

Selon un second mode de réalisation de l'invention, le moyen de verrouillage de l'étrier sur le support fixe comporte une partie élastiquement déformable en direction radiale, constituée par un jonc élastique disposé dans une gorge périphérique formée sur le moyen de verrouillage, et le jonc élastique coopérant avec une surface conique formé dans un perçage ménagé dans une patte solidaire du support fixe, pour bloquer le moyen de verrouillage.

D'autres caractéristiques, buts et avantages de la présente invention vont maintenant être décrits plus en détail en référence à des modes de réalisation donnés à titre d'exemple et illustrés par les dessins annexés dans lesquels :
- La Figure 1 est une vue de dessus d'un frein à disque réalisé conformément à la présente invention,
- La Figure 2 est une vue en coupe selon la ligne A-A de la Figure 1 montrant plus en détail un premier mode de réalisation d'un moyen de verrouillage selon l'invention,
- La Figure 3 est une vue analogue à celle de la Figure 2 d'un second mode de réalisation de l'invention,
- La Figure 4 et 5 illustrent des variantes du mode de réalisation de la Figure 3.

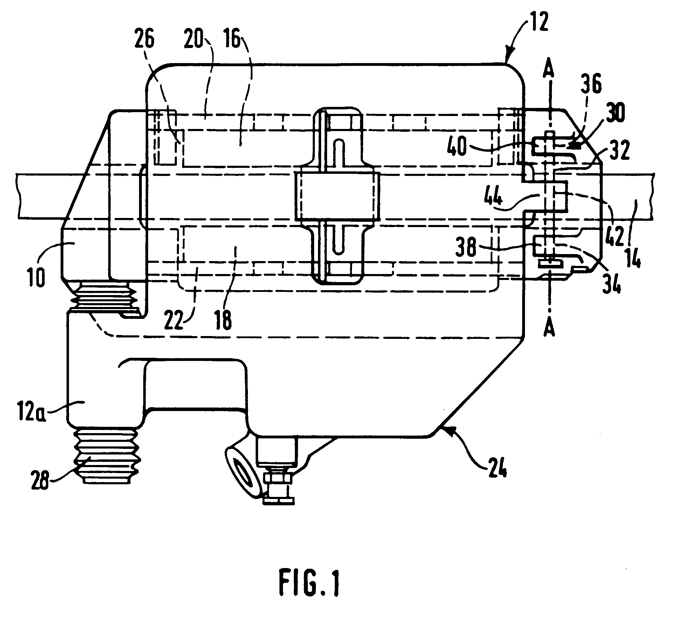

En se reportant tout d'abord à la Fig. 1, on voit que le frein à disque représenté sur la Figure comporte un support 10 prévu pour être associé à une partie fixe du véhicule non représentée. Le support fixe 10 reçoit en coulissement un étrier mobile 12 chevauchant un disque 14 prévu pour être associé en rotation à une roue du véhicule.

Le frein à disque comporte en outre deux organes de friction 16 et 18, munis respectivement, de plaques support 20 et 22, susceptibles de venir en engagement de friction avec le disque tournant 14, lors de l'actionnement d'un moteur hydraulique de frein 24. Les organes de friction 16 et 18 sont reçus en ancrage et en coulissement dans une ouverture 26 formée dans le support fixe 10.

L'étrier 12 coulisse sur le support fixe 10 au moyen d'une colonnette axiale 28 dont l'axe est sensiblement parallèle à l'axe du disque 14. La colonnette 28 est solidaire du support fixe 10 et est reçue en coulissement dans un alésage correspondant formé dans un bras 12a de l'étrier 12.

Le frein à disque comprend également un moyen, désigné dans son ensemble par la référence 30, de verrouillage de l'étrier 12 sur le support fixe 10 qui s'oppose au basculement de l'étrier autour de l'axe de la colonnette 28, mais qui permet le coulissement de l'étrier 12 sur la colonnette 28 lors de l'actionnement du moteur hydraulique de frein 24.

Pour ce faire, le moyen de verrouillage 30 est constitué d'une broche 32 d'axe parallèle à celui de la colonnette 28 et passant dans des perçages 34 et 36 ménagés dans des pattes 38 et 40 respectivement solidaires du support fixe 10, et dans une ouverture 42 ménagée dans un prolongement 44 de l'étrier 12.

Conformément à l'invention, cette broche 32 comporte des moyens autobloquants, qui permettent un montage facile de la broche sur le support fixe, et sa retenue dans le sens axial de façon à ce qu'elle ne s'échappe pas une fois installée, et ce de façon fiable. Ces moyens autobloquants sont représentes plus en détail sur les figures suivantes.

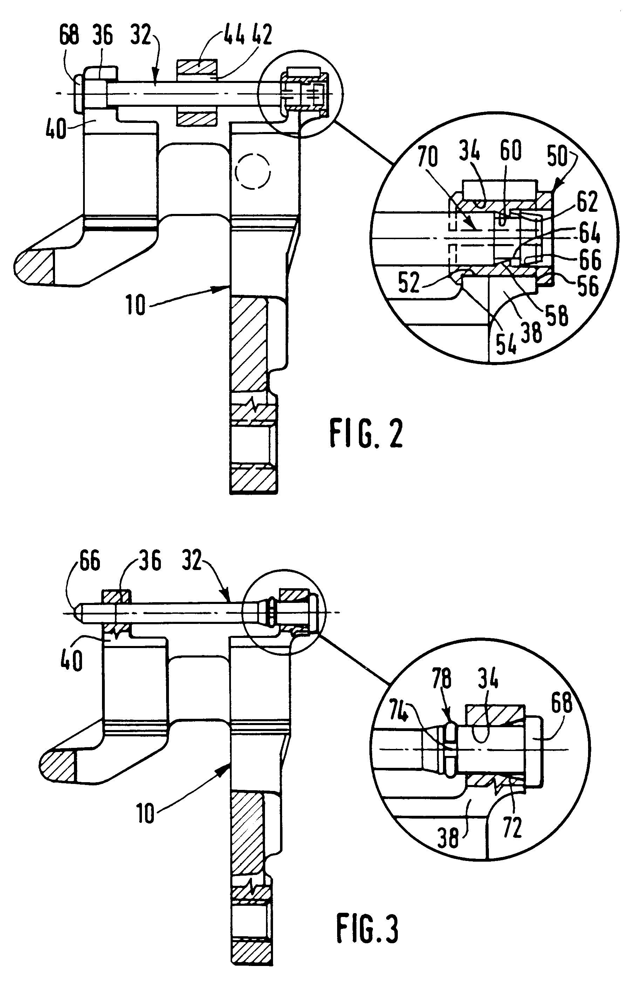

On a représenté sur la Figure 2 un exemple d'un premier mode de réalisation de l'invention. On voit que l'on a dispose dans une des pattes du support fixe 10, par exemple la patte 38, à l'intérieur du perçage 34, une douille 50 en matériau plastique pouvant supporter les hautes températures générées lors d'une utilisation intensive du frein à disque ainsi équipé.

La paroi extérieure de la douille 50 est formée avec une gorge 52 de même longueur axiale que celle du perçage 34, de sorte que les bords 54 et 56 de cette gorge 52 assurent le maintien en place de la douille 50 dans le perçage 34. La paroi intérieure de la douille 50 est formée avec un renflement 58 faisant saillie vers l'intérieur de la douille. Ce renflement 58 possède une paroi conique 60 et une paroi 62 perpendiculaire à l'axe de symétrie de la douille 50.

La broche 32, de même diamètre extérieur que le diamètre intérieur de la douille 50 dans sa partie où n'est pas formé le renflement 58, est formée au voisinage de l'une de ses extrémites avec une gorge périphérique 64, dont le diamètre extérieur est égal au diamètre intérieur du renflement 58. La partie 66 de la broche 32 située entre la gorge 64 et son extrémité est réalisée de forme conique, dont l'angle au sommet est avantageusement égal à l'angle au somment de la paroi conique 60 du renflement 58. L'autre extrémité de la broche 32 est formée avec une tête élargie 68.

D'après les explications qui précèdent, on aura facilement compris le processus d'installation de la broche 32. Lorsqu'une opération d'entretien du frein est terminée, par exemple lorsque les organes de friction 16, 18, 20, 22 ont été remplacés par des organes neufs et que le frein à disque est prêt à être remis en service, il suffit de disposer dans le perçage 34 de la patte 38 une douille 50 neuve. Cette douille s'introduit et se positionne facilement dans le perçage 34 du fait de l'élasticité du matériau dont elle est constituée. De façon avantageuse, cette élasticité peut être accrue en pratiquant sur une partie de la surface externe de la douille 50 une ou plusieurs rainures longitudinales 70. De façon également avantageuse, ces rainures 70 sont réalisées dans la gorge 52 de la surface externe de la douille 50, et ont la même longueur que la gorge 52.

Une fois le support fixe ainsi équipé d'une douille, l'étrier 12 est pivoté autour de la colonnette 28 jusqu'à ce que l'ouverture 42 dans le prolongement 44 de l'étrier soit alignée avec les perçages 34 et 36 des pattes 38 et 40 du support fixe 10. La broche 32 peut alors être introduite, dans l'exemple choisi, dans le perçage 36. Après avoir dépasse le prolongement 44, l'extrémité de la broche 32 pénètre à l'intérieur de la douille 50.

Cette pénétration est facilitée par la forme conique de la partie d'extrémité 66 de la broche. En poursuivant son mouvement, cette partie conique 66 vient rencontrer la paroi conique 60 du renflement 58, qu'elle va repousser vers l'extérieur grâce à l'élasticité du matériau de la douille, avantageusement accrue par la présence des rainures 70. Lorsque la partie conique 66 de la broche a dépassé la paroi 62 du bourrelet 58, ce dernier pénètre alors dans la gorge 64 de la broche 32, la paroi 62 du bourrelet 58 empêchant alors tout mouvement en sens inverse de la broche 32. Cette dernière se trouve donc immobilisée dans sa position active du seul fait de son introduction dans la douille 50. L'interdiction de tout mouvement axial de la broche 32 est parfaite si on prévoit, de façon avantageuse, que la tête 68 de la broche vienne au contact de la patte 40, lors de la mise en place de la broche, immédiatement après que le bourrelet 58 ait pénétré dans la gorge 64 à l'autre extrémité de la broche.

On voit donc bien qu'on a réalisé, selon l'invention, un moyen de verrouillage en rotation de l'étrier autour de la colonnette particulièrement simple à mettre en oeuvre car il ne nécéssite aucune manoeuvre supplémentaire pour le bloquer en translation axiale, puisqu'il comporte les moyens autobloquants qu'on vient de décrire. Cette broche de verrouillage est donc particulièrement simple à mettre en place puisqu'il suffit de l'introduire facilement grâce à la forme conique de son extrémité, par un seul mouvement de translation axiale, jusqu'à ce qu'elle vienne en butée, par exemple par l'intermédiaire de sa tête, contre le support fixe, position dans laquelle elle se trouvera automatiquement bloquée contre toute translation ultérieure, dans un sens ou dans l'autre.

Un tel moyen de verrouillage est également particulièrement économique puisque l'usinage de l'extrémité de la broche et le moulage de la douille plastique sont des opérations très peu onéreuses, en regard des solutions de blocage connues avec ressorts, goupilles clavettes, etc... Ceci permet de prévoir également que la douille plastique soit remplacée lors de chaque opération d'entretien du frein.

Bien entendu, diverses variantes de ce mode de réalisation sont possibles. On peut par exemple prévoir que la butée de fin de course s'effectue par un épaulement forme sur la broche et venant coopérer avec la face de la douille par où l'extrémité conique de la broche a pénétré. Bien entendu également, le rôle de la patte 38 du support fixe n'est pas déterminant, la patte 40 pouvant être équipée de la douille 50, la mise en place de la broche 32 se faisant alors par le perçage 34 de la patte 38.

On a représenté sur la Figure 3 un autre mode de réalisation de l'invention, où les moyens autobloquants de la broche 32 sont constitués à l'aide d'un jonc élastique à la place d'une douille plastique comme précédemment.

On voit sur la Figure 3 que le perçage 34 dans la patte 38 est réalisé, dans sa partie d'extrémité tournée vers l'extérieur du support fixe 10, avec un évasement conique 72. D'autre part, la broche 32 est formée, au voisinage de sa tête 68, avec une gorge périphérique annulaire 74 dans laquelle est disposé un jonc élastique 78.

On aura compris immédiatement le fonctionnement des moyens autobloquants de ce mode de réalisation. Comme précédemment, lorsque le frein à disque est prêt à être remis en service, la broche 32 munie du jonc 78 est introduite par son extrémité 66 dans le perçage 34 jusqu'à ce que cette dernière atteigne le perçage 36. Pendant ce mouvement, la gorge 74 atteint l'entrée du perçage 34 avec le jonc qu'elle contient. Celui-ci rencontre alors la surface conique 72, qui le comprime au point qu'il s'insère entièrement dans l'espace compris entre la gorge 74 et le perçage 34. Il reste dans cet état jusqu'à ce que la gorge 74 ait complètement dépassé le perçage 34. Il reprend alors son état de repos en augmentant son diamètre, rendant ainsi impossible le retrait de la broche 32.

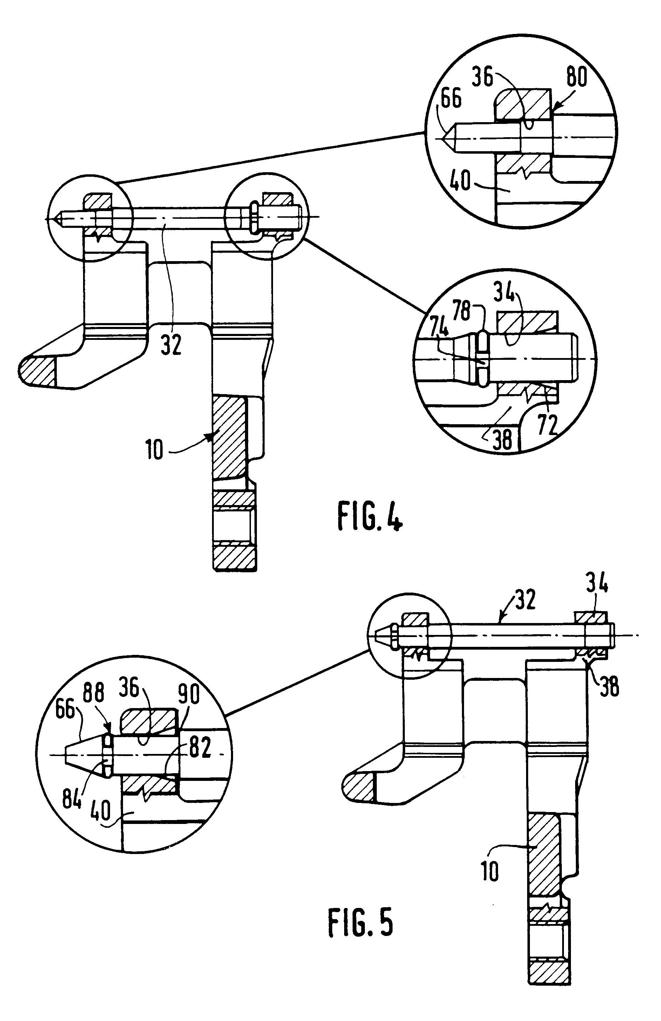

Comme précédemment, il est avantageux de prévoir une surface de butée sur la broche 32 pour interdire son mouvement dans les deux sens. Sur la Figure 3, on voit que cette surface de butée est constituée par la tête 68 de la broche 32. Il sera alors judicieux de prévoir que la distance entre la tête 68 et la gorge 74 soit légèrement supérieure à la profondeur du perçage 34, c'est-à-dire à l'épaisseur de la patte 38. Sur la Figure 4, on voit que cette surface de butée est constituée par un épaulement 80 formé près de l'extrémité 66 de la broche 32. Il sera alors judicieux dans ce cas que la distance entre l'épaulement 80 et la gorge 74 soit légèrement inférieure à la distance entre les pattes 38 et 40. On voit également sur la Figure 4 qu'il n'est alors plus nécessaire que la broche 32 possède une tête 68. Elle peut cependant en posséder une, par exemple pour faciliter sa mise en place.

On a représenté sur la Figure 5 une autre variante du mode de réalisation représenté aux Figures 3 ou 4, dans laquelle les moyens autobloquants sont situés du côté de l'extrémité 66 de la broche 32. On voit sur la Figure 5 que le perçage 36 dans la patte 40 est réalisé, dans sa partie d'extrémité tournée vers l'intérieur du support fixe 10, avec un évasement conique 82. La broche 32 est formée, au voisinage de son extrémité 66 avec une gorge périphérique annulaire 84 dans laquelle est disposé un jonc élastique 88.

On aura compris que les surfaces 82 et 72, les gorges 84 et 74 et les joncs 88 et 78 sont identiques et ont la même fonction. Ils se seront donc pas décrits plus en détail. L'introduction de la broche 32 ayant été effectuée par le perçage 34, les moyens autobloquants s'effacent lorsque l'extrémité 66 de la broche pénètre dans le perçage 36, et interdisent le retrait de la broche dès que la gorge 84 est sortie de la patte 40. Dans le but de ne pas donner à la broche 32 une longueur excessive, la gorge 84 sera avantageusement formée adjacente à la partie conique 66 d'extrémité, comme on l'a représenté. La butée d'interdiction de mouvement de la broche 32 dans l'autre sens peut être réalisée par un épaulement 90 formé sur la broche 32 de l'autre côté de la patte 40 comme on l'a représenté, ou par la tête 68 de la broche 32 coopérant avec la patte 38.

Comme précédemment, on pourra prévoir de remplacer le jonc élastique 78 ou 88 lors de chaque opération d'entretien du frein.

## Revendications

1. Frein à disque à étrier (12) monté coulissant sur un support fixe (10) comportant deux éléments de friction (16, 18) reçus en ancrage et en coulissement dans ledit support fixe (10) et susceptibles de venir en engagement de friction avec les faces opposées d'un disque tournant (14) lors de l'actionnement d'un moteur de frein (24), une colonnette axiale (28) solidaire du support fixe (10) et reçue en coulissement dans un alésage correspondant formé dans l'étrier (12), et un moyen de verrouillage (32) de l'étrier (12) en rotation autour de la colonnette (28) sur le support fixe (10) caractérisé en ce que le moyen de verrouillage (32) de l'étrier (12) sur le support fixe (10) comporte une partie élastiquement déformable en direction radiale, constituée par un renflement (58) formé sur la paroi intérieure d'une douille (50) disposée dans un perçage (34,36) ménagé dans une patte (38,40) solidaire du support fixe (10), et en ce que le renflement (58) de la douille (50) coopère avec une gorge périphérique (64) formée sur le moyen de verrouillage (32) pour bloquer ce dernier.

2. Frein à disque à étrier (12) monté coulissant sur un support fixe (10) comportant deux éléments de friction (16, 18) reçus en ancrage et en coulissement dans ledit support fixe (10) et susceptibles de venir en engagement de friction avec les faces opposées d'un disque tournant (14) lors de l'actionnement d'un moteur de frein (24), une colonnette axiale (28) solidaire du support fixe (10) et reçue en coulissement dans un alésage correspondant formé dans l'étrier (12), et un moyen de verrouillage (32) de l'étrier (12) en rotation autour de la colonnette (28) sur le support fixe (10) caractérisé en ce que le moyen de verrouillage (32) de l'étrier (12) sur le support fixe (10) comporte une partie élastiquement déformable en direction radiale, constituée par un jonc élastique (78, 88) disposé dans une gorge périphérique (74) formée sur le moyen de verrouillage (32), et en ce que le jonc élastique (78, 88) coopère avec une surface conique (72, 82) formé dans un perçage (34, 36) ménagé dans une patte (38, 40) solidaire du support fixe (10), pour bloquer le moyen de verrouillage.

## Claims

1. Disk-brake having a caliper (12) mounted slideably on a stationary support (10), comprising two friction pads (16, 18) received in an anchored and sliding manner in said stationary support (10) and capable of coming into frictional engagement with the opposite faces of a rotating disk (14) during the actuation of a brake motor (24), an axial guide pin (28) fixed to the stationary support (10) and received in a sliding manner in a corresponding bore formed in the caliper (12), and a means (32) for locking the caliper (12) to the stationary support (10) in terms of rotation about the guide pin (28), characterized in that the means (32) for locking the caliper (12) to the stationary support (10) comprises a part elastically deformable in the radial direction, consisting of a bulge (58) formed on the inner wall of a bush (50) arranged in a perforation (34, 36) made in a lug (38, 40) fixed to the stationary support (10), and in that the bulge (58) of the bush (50) interacts with a peripheral groove (64) formed on the locking means (32) in order to immobilize it.

2. Disk-brake having a caliper (12) mounted slideably on a stationary support (10), comprising two friction pads (16, 18) received in an anchored and sliding manner in said stationary support (10) and capable of coming into frictional engagement with the opposite faces of a rotating disk (14) during the actuation of a brake motor (24), an axial guide pin (28) fixed to the stationary support (10) and received in a sliding manner in a corresponding bore formed in the caliper (12), and a means (32) for locking the caliper (12) to the stationary support (10) in terms of rotation about the guide pin (28), characterized in that the means (32) for locking the caliper (12) to the stationary support (10) comprises a part elastically deformable in the radial direction consisting of an elastic ring (78, 88) arranged in a peripheral groove (74) formed on the locking means (32), and in that the elastic ring (78, 88) interacts with a conical surface (72, 82) formed in a perforation (34, 36) made in a lug (38, 40) fixed to the stationary support (10) in order to immobilize the locking means.

## Patentansprüche

1. Scheibenbremse mit einem Bremssattel (12), der gleitend an einem festen Träger (10) angebracht ist, der zwei Reibelemente (16, 18) enthält, die verschiebbar in dem festen Träger (10) verankert sind und mit zueinander entgegengesetzten Seiten einer sich drehenden Scheibe (14) bei der Betätigung einer Bremsbetätigungsvorrichtung (24) in einen Reibungseingriff gebracht werden können, sowie einer axialen Säule (28), die fest mit dem festen Träger (10) verbunden und gleitend in einer entsprechenden Bohrung aufgenommen ist, die in dem Bremssattel (12) ausgebildet ist, und einem Mittel (32) zum Verriegeln des Bremssattels (12) gegen Drehung um die Säule (28) an dem festen Träger (10), dadurch gekennzeichnet, daß das Mittel (32) zum Verriegeln des Bremssattels (12) an dem festen Träger (10) einen in radialer Richtung elastisch verformbaren Abschnitt umfaßt, der gebildet ist durch eine Ausbauchung (58), die auf der Innenwand einer Buchse (50) ausgebildet ist, die in einer Bohrung (34, 36) angeordnet ist, die in einer fest mit dem festen Träger (10) verbundenen Lasche (38, 40) ausgebildet ist, und daß die Ausbauchung (58) der Buchse (50) mit einer an dem Mittel (32) zum Verriegeln ausgebildeten Umfangsnut (64) zusammenwirkt, um dieses zu blockieren.

2. Scheibenbremse mit einem Bremssattel (12), der gleitend an einem festen Träger (10) angebracht ist, der zwei Reibelemente (16, 18) enthält, die verschiebbar in dem festen Träger (10) verankert sind und mit zueinander entgegengesetzten Seiten einer sich drehenden Scheibe (14) bei der Betätigung einer Bremsbetätigungsvorrichtung (24) in einen Reibungseingriff gebracht werden können, sowie einer axialen Säule (28), die fest mit dem festen Träger (10) verbunden und gleitend in einer entsprechenden Bohrung aufgenommen ist, die in dem Bremssattel (12) ausgebildet ist, und einem Mittel (32) zum Verriegeln des Bremssattels (12) gegen Drehung um die Säule (28) an dem festen Träger (10), dadurch gekennzeichnet, daß das Mittel (32) zum Verriegeln des Bremssattels (12) an dem festen Träger (10) einen in radialer Richtung elastisch verformbaren Abschnitt umfaßt, der gebildet ist durch einen elastischen Sicherungsring (78, 88), der in einer an dem Mittel (32) zum Verriegeln ausgebildeten Umfangsnut (74) angeordnet ist, und daß der elastische Sicherungsring (78, 88) zum Blockieren des Mittels zum Verriegeln mit einer konischen Fläche (72, 82) zusammenwirkt, die in einer Bohrung (34, 36) gebildet ist, die in einer fest mit dem festen Träger (10) verbundenen Lasche (38, 40) ausgebildet ist.
